(19) Europäisches Patentamt
European Patent Office
Office européen des brevets

(11) **EP 1 898 488 A1**

(12) **EUROPEAN PATENT APPLICATION**
published in accordance with Art. 153(4) EPC

(43) Date of publication:
**12.03.2008 Bulletin 2008/11**

(51) Int Cl.:
*H01Q 1/38* (2006.01)          *B42D 15/10* (2006.01)
*G06K 19/00* (2006.01)        *H01Q 9/04* (2006.01)

(21) Application number: **05765385.9**

(22) Date of filing: **28.06.2005**

(86) International application number:
**PCT/JP2005/011807**

(87) International publication number:
**WO 2007/000807 (04.01.2007 Gazette 2007/01)**

(84) Designated Contracting States:
**DE FR GB**

(71) Applicant: **Fujitsu Ltd.**
**Kawasaki-shi, Kanagawa 211-8588 (JP)**

(72) Inventors:
• **YAMAGAJO, Takashi**
**c/o FUJITSU LIMITED**
**Kawasaki-shi, Kanagawa 2118588 (JP)**

• **MANIWA, Toru**
**c/o FUJITSU LIMITED**
**Kawasaki-shi, Kanagawa 2118588 (JP)**
• **KAI, Manabu**
**c/o FUJITSU LIMITED**
**Kawasaki-shi, Kanagawa 2118588 (JP)**

(74) Representative: **HOFFMANN EITLE**
**Patent- und Rechtsanwälte**
**Arabellastrasse 4**
**81925 München (DE)**

(54) **RADIO FREQUENCY IDENTIFICATION TAG**

(57)    A radio frequency identification tag that is thin and flexible, and is capable of performing communication when attached to metal, and also can be manufactured at a lower cost.

An inverted-F antenna (10) has a radiating element (11), a short pin (12), a power supply portion (13), and a ground bottom board (14), and is flatly formed on the front surface of a film (30). The film (30) is an insulting film such as polyethylene terephthalate, and is attached to the metal housing (40) of an electronic device such that the radiating element (11), the short pin (12), and the power supply portion (13) of the inverted-F antenna (10) formed on the front surface are projected from the metal housing (40).

FIG. 1

Printed by Jouve, 75001 PARIS (FR)

**Description**

Technical Field

This invention relates to a radio frequency identification tag, and more particularly, to a radio frequency identification tag that can be attached to metal.

Background Art

With respect to contactless tags such as RFID (Radio Frequency Identification) tags, information can be read therefrom/written therein by radio communication. By using such tags, information including product lot and production history can be managed. Therefore, the tags are highly expected as an alternative of barcodes that are currently used for managing product information.

Conventionally, frequencies including 13.56 MHz and 2.45 GHz are used for RFID tags. At present, UHF (Ultra High Frequency) band including 953 MHz becomes usable. However, RFID tags have characteristics that they cannot perform communication when attached to metal objects (high conductivity objects) such as PC (Personal Computer) housings, measures, and metal resources.

However, there are RFID tags that can perform communication even when attached to metal. Such tags include Encapsulated Stick Tag produced by Intermec Technologies Corporation (U.S.A) and Prox Link MT (APT1014) produced by AWID Corporation (U.S.A). These RFID tags are hard and about 4mm in thickness, and therefore they are bit large to be attached to products, etc. In addition, other RFID tags have been proposed. For example, there is an antenna coil for RFID formed by sandwiching both surfaces of a magnetic core member made of metal foil, etc. between coils (for example, Patent Literature 1). Another antenna coil for RFID is formed by inserting a magnetic core member between coils on a meandering sheet (For example, Patent Literature 2).

Patent Literature 1: Japanese Unexamined Patent Application Publication No. 2002-252518
Patent Literature 2: Japanese Unexamined Patent Application Publication No. 2002-117383

Disclosure of Invention

Problems that the Invention is to Solve

However, conventional RFID tags have a problem that they are thick and hard, as described above, and they are difficult to be used when attached to curved surfaces.

In Patent Literatures 1 and 2, the configuration where coils sandwich a magnetic core member is three-dimensional and is complicated, which increases manufacturing costs.

This invention has been made in view of the foregoing and intends to provide a radio frequency identification tag that is thin and flexible, can be manufactured at a lower cost, and is usable for radio communication even when attached to metal.

Means for Solving the Problems

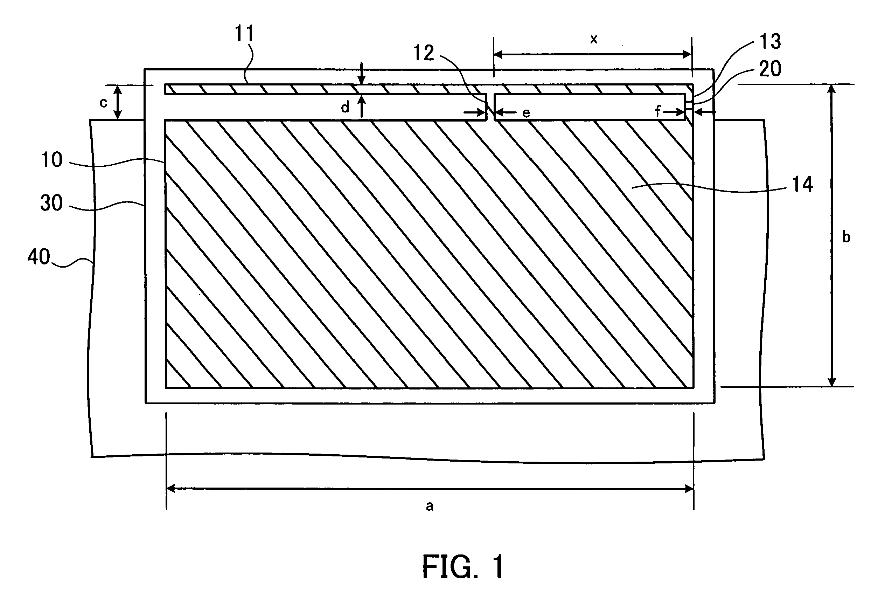

In order to solve the above problems, this invention proposes a radio frequency identification tag that can be attached to metal as shown in FIG. 1. This radio frequency identification tag comprises a film 30 and an inverted-F antenna 10 flatly formed on the film 30, wherein the film 30 is attached to metal such that a radiating element 11, a short pin 12, and a power supply portion 13 of the formed inverted-F antenna 10 are projected from the metal.

Such the radio frequency identification tag is thin and flexible and has a simple configuration because the flat inverted-F antenna 10 is formed on the film 30.

Further, since the film 30 is attached to metal such that the radiating element 11, the short pin 12, and the power supply portion 13 of the formed inverted-F antenna 10 are projected from the metal, the radio frequency identification tag is usable for radio communication when attached to the metal.

Advantages of the Invention

A radio frequency identification tag according to the present invention is thin and flexible, and is usable when attached to a curved surface because a flat inverted-F antenna is formed on a film. In addition, this tag has a simple configuration and can be manufactured at a lower cost.

Further, since the film is attached to metal such that a radiating element, a short pin, and a power supply portion of the formed inverted-F antenna are projected from the metal, this tag is usable for radio communication when attached to the metal.

The above and other objects, features and advantages of the present invention will become apparent from the following description when taken in conjunction with the accompanying drawings which illustrate preferred embodiments of the present invention by way of example.

Brief Description of the Drawings

[FIG. 1] A plan view of an RFID tag according to the first embodiment.

[FIG. 2] A diagram showing equalization circuits of an inverted-F antenna and an IC chip of FIG. 1.

[FIG. 3] A graph showing the relationships between the position of a short pin and the capacitance of the inverted-F antenna.

[FIG. 4] A graph showing the relationships between the position of the short pin and the resistance of the inverted-F antenna.

[FIG. 5] A perspective view of the inverted-F antenna attached to a copper clad board.

[FIG. 6] A table for explaining the relationships among the position of the short pin, the capacitance and the resistance of the inverted-F antenna, and the transmission distance of radio waves.

[FIG. 7] A perspective view of the RFID tag of FIG. 1 attached to the back surface of a crystal liquid screen of a notebook personal computer.

[FIG. 8] A perspective view of the RFID tag of FIG. 1 attached next to a fingerprint sensor of the notebook personal computer.

[FIG. 9] Smith charts showing simulation of the inverted-F antenna.

[FIG. 10] Smith charts showing actual measurement values of the inverted-F antenna.

[FIG. 11] A perspective view of the RFID tag attached to a metal housing, which is a model for characteristic change.

[FIG. 12] A graph showing the relationships between the frequency and the capacitance in the cases of the RFID tag alone and attached to a metal housing.

[FIG. 13] A graph showing the relationships between the frequency and the gain in the cases of the RFID tag alone and attached to a metal housing.

[FIG. 14] A graph showing the gain in the case where an IC chip is applied in the RFID tag of FIG. 1, the IC chip exhibiting a transmission distance of 2.15 m in radio communication using a half-wave folded dipole antenna.

[FIG. 15] A view for explaining directivity of the RFID tag.

[FIG. 16] A view showing the directivity of the RFID tag of FIG. 15.

[FIG. 17] A plan view of an RFID tag according to the second embodiment.

[FIG. 18] Smith charts showing simulation of an inverted-F antenna.

Best Mode for Carrying Out the Invention

Hereinafter, the first embodiment of the present invention will be described in detail with reference to the accompanying drawings.

FIG. 1 is a plan view of an RFID tag according to the first embodiment. As shown in this figure, the RFID tag comprises an inverted-F antenna 10, an IC chip 20, and a film 30. The inverted-F antenna 10 is made of metal foil and is flatly formed on the front surface of the film 30. It should be noted that FIG. 1 shows the RFID tag attached to a metal housing 40 of an electronic device, for example.

The inverted-F antenna 10 comprises a radiating element 11, a short pin (matching circuit) 12, a power supply portion 13, and a ground bottom board 14. The radiating element 11 has the same length as one side of the ground bottom board 14 and is formed in parallel to the board 14, and one end thereof is connected to the power supply portion 13 and the other end thereof is open. Between both ends of the radiating element 11, the short pin 12 is provided and is connected to the ground bottom board 14. Between the power supply portion 13 and the ground bottom board 14, the IC chip 20 is attached. The IC chip 20 performs radio communication with a reader/writer via the inverted-F antenna 10 via radio waves of 953 MHz UHF band, for example. The IC chip 20 writes therein data received from the reader/writer and sends read data to the reader/writer.

The film 30 with the inverted-F antenna 10 formed thereon is attached to the metal housing 40 such that the radiating element 11, the short pin 12, and the power supply portion 13 of the inverted-F antenna are projected from the metal housing 40 (positioned outside the metal housing 40). The film 30 may be attached to the metal housing 40 with a double stick tape or with glue. In FIG. 1, the film 30 is attached such that one side of the ground bottom board 14 on which the short pin 12 and the power supply portion 13 are provided is aligned with one side of the metal housing 40, and the radiating element 11, the short pin 12, and the power supply portion 13 of the inverted-F antenna 10 are projected from the metal housing 40. The radiating element 11, the short pin 12, and the power supply portion 13 which do not overlie the metal housing 40 allow radio communication with the reader/writer.

The ground bottom board 14 of the inverted-F antenna 10 is 45 mm in length b and 80 mm in width a, for example. The radiating element 11 is 80 mm long which is the same as the width of the ground bottom board 14. A space c between the radiating element 11 and the ground bottom board 14 is 5 mm. The radiating element 11, the short pin 12, and the power supply portion 13 are 1 mm in width d, e, and f. A space x between the short pin 12 and the power supply portion 13 is determined by the impedance of the IC chip 20. That is to say, the position of the short pin 12 is determined so as to match the impedance of the IC chip 20. The size of the film 30 is the same as that of the outer frame of the inverted-F antenna 10 or larger so that the inverted-F antenna 10 can be formed on the film 30. It should be noted that the size of the inverted-F antenna is not limited to the aforementioned size.

The material of the inverted-F antenna 10 is metal such as copper, silver, or aluminum. The thickness of the inverted-F antenna 10 is determined with taking into consideration current loss that is caused due to skin effect. The skin effect is determined based on the frequency of current flowing through an inverted-F antenna and the conductivity of the material. For example, in the case where the material is copper and the frequency of radio waves is 913 MHz, a thickness of 2 pm to 3 pm or more is required. In other words, the inverted-F antenna 10 of a thickness of 50 pm or less can be realized. The film 30 is an insulator, and is a PET (polyethylene terephthalate) film, for example. The thickness of the film 30 is not especially limited.

The inverted-F antenna 10 is manufactured in such a way that, for example, a copper foil is cut in a shape shown in FIG. 1, and the cut copper foil is attached to the film 30 with glue or the like. Alternatively, the inverted-F antenna 10 is manufactured by printing copper of a shape shown in FIG. 1 on the film 30 by screen printing. Still alternatively, the inverted-F antenna 10 of a shape shown in FIG. 1 is formed on the film 30 by evaporating copper on the film 30, for example. Still alternatively, the inverted-F antenna 10 of a shape shown in FIG. 1 is formed on the film 30 by masking and etching metals laminated on the film 30.

By forming the inverted-F antenna on the film 30 in such a way, a simply-configured RFID tag can be realized, and the RFID tag attached to metal is capable of performing radio communication with a reader/writer. Further, the simple configuration where a flat inverted-F antenna is formed on the film 30 allows the RFID tag to be attached to a curved surface of metal. Furthermore, the inverted-F antenna that is flatly formed on the film 30 can simplify the manufacturing and reduce the manufacturing cost.

Now, the principle of why an RFID tag attached to the metal housing 40 is capable of performing communication will be described simply. In the case where radio waves are incident on the front surface of metal, the radio waves are reflected on the surface. At this time, the phase of electric field of the reflected radio waves is shifted by 180 degrees with respect to the phase of electric field of the incident radio waves, and the metal has no electric field. Therefore, the RFID tag that is entirely attached to the metal housing 40 cannot transmit/receive radio waves.

The RFID tag of FIG. 1 is attached to the metal housing 40 such that the radiating element 11, the short pin 12, and the power supply portion 13 are projected from the metal housing 40. Therefore, the metal housing 40 does not lie under the radiating element 11, the short pin 12, and the power supply portion 13, and radio waves are not reflected by the metal housing 40, thus making it possible to perform radio communication.

Next, the inverted-F antenna 10 and the IC chip 20 of the RFID tag shown in FIG. 1 will be described.

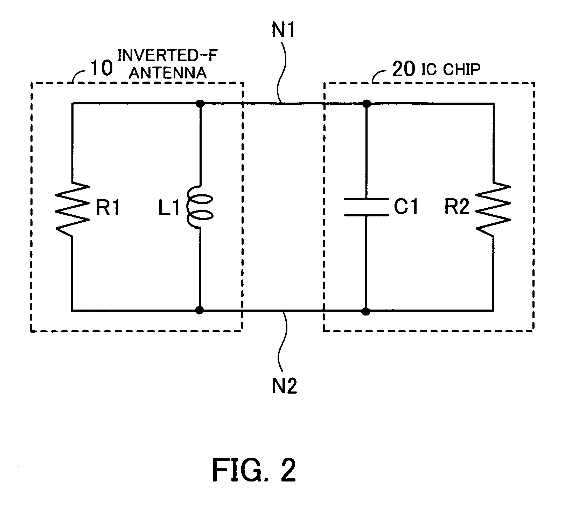

FIG. 2 shows equalization circuits of the inverted-F antenna and the IC chip of FIG. 1. As shown in this figure, from the IC chip 20 side, the inverted-F antenna 10 can be regarded as a circuit comprising a resistance R1 and a coil L1. From the inverted-F antenna 10 side, the IC chip 20 can be regarded as a circuit comprising a capacitor C1 and a resistance R2. It should be noted that a node N1 of this figure corresponds to the power supply portion 13 of FIG. 1 and a node N2 corresponds to the ground bottom board 14.

The impedance of the IC chip 20 that is considered from the inverted-F antenna 10 side is determined by the internal circuit of the IC chip 20 (that is, the capacitor C1 and the resistance R2 in FIG. 2). Therefore, the impedance of the inverted-F antenna 10 is adjusted to match the impedance of the IC chip 20.

The impedance (the parallel circuit of the coil L1 and the resistance R1 of FIG. 2) of the inverted-F antenna 10 can be adjusted by changing the space x between the short pin 12 and the power supply portion 13, as described with FIG. 1. Therefore, the position of the short pin 12 of the inverted-F-antenna 10 is determined so that the impedance of the inverted-F antenna 10 matches the impedance of the IC chip 20.

By the way, the admittance of the inverted-F antenna 10 is derived from the following equation (1) based on the circuit diagram of FIG. 2. In addition, the admittance of the IC chip 20 is derived from the following equation (2) based on the circuit diagram of FIG. 2. In the equations (1) and (2), j represents an imaginary number and ω represents an angular frequency.

$$Y = (1/R1) + (1/j\omega L1) \ ... \ (1)$$

$$Y = (1/R2) + j\omega C1 \ ... \ (2)$$

In order that the impedance of the inverted-F antenna 10 matches that of the IC chip 20, the position of the short pin 12 should be determined so as to satisfy R1=R2, which eliminates reactive power, and $\omega C1=1/\omega L1$.

Now, the relationships between the position of the short pin 12 and the capacitance of the inverted-F antenna 10 will be described.

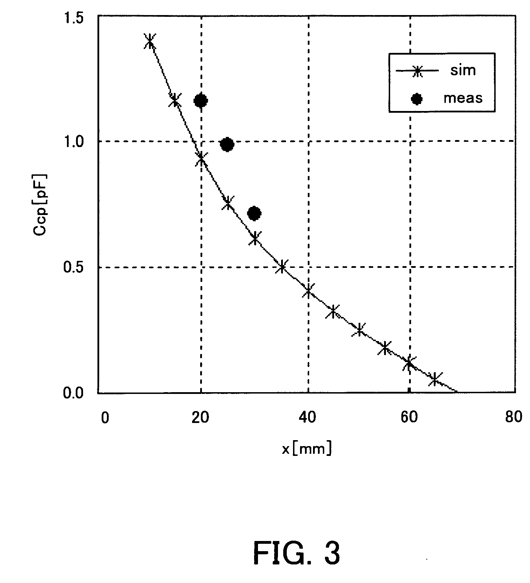

FIG. 3 is a graph showing the relationships between the position of a short pin and the capacitance of an inverted-F antenna. The horizontal axis in this graph shows the position (space x) of the short pin 12 of FIG. 1 while the vertical axis shows the capacitance Ccp (having the relationship of $\omega Ccp=1/\omega L1$) of the inverted-F antenna. Cross marks "$\times$" of the graph in this figure show results of simulation of the inverted-F antenna 10 having the size explained with FIG. 1, where the simulation was conducted with 950 MHz frequency of radio waves.

In the case where the capacitance of the IC chip 20 is 1.0 pF, for example, it can be known from the simulation results of this graph that the impedances can be matched by setting x to about 18 mm. In addition, in the case where the capacitance of the IC chip 20 is 0.5 pF, it can be known from the simulation results of the graph that the impedances can be matched by setting x to about 35 mm.

Black dots **"•"** of the graph in this figure show the actual measurement values of the inverted-F antenna 10 having the size explained with FIG. 1, where the measurements were done with 950 MHz frequency of radio waves. It can be known that the actual measurement values approximately match the simulation results.

Now, the relationships between the position of the short pin 12 and the resistance of the inverted-F antenna 10 will be described.

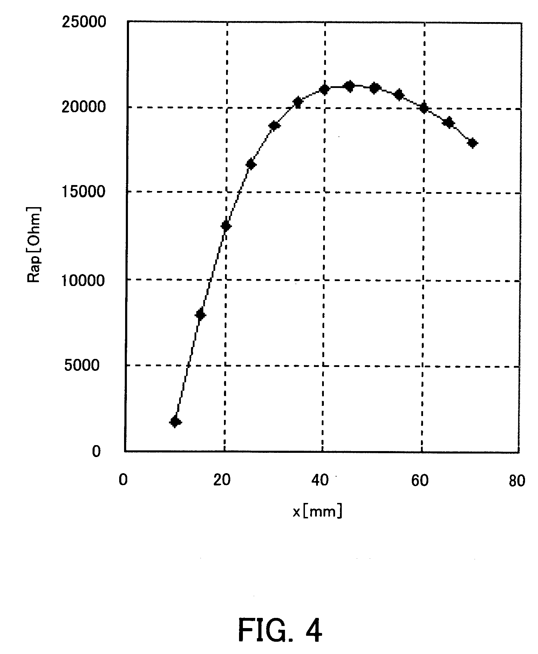

FIG. 4 is a graph showing the relationships between the position of a short pin and the resistance of an inverted-F antenna. The horizontal axis of this graph shows the position (space x) of the short pin 12 of FIG. 1 while the vertical axis shows the resistance Rap of the inverted-F antenna. In this connection, the graph of this figure shows the results of simulation of the inverted-F antenna 10 having the size explained with FIG. 1, where the simulation was conducted with 950 MHz frequency of radio waves.

For example, in the case where the resistance of the IC chip 20 is 12500 Ω, it can be known from the simulation results of this graph that the impedances can be matched by setting x to about 20 mm. In addition, in the case where the resistance of the IC chip 20 is 17500 Ω, it can be known from the simulation results of the graph that the impedances can be matched by setting x to about 25 mm.

It should be noted that the capacitance and the resistance of the inverted-F antenna 10 independently vary according to the position of the short pin 12 as shown in FIG. 3 and 4. Therefore, the position of the short pin 12 should be determined with taking into consideration the results of the both simulations, not one simulation only. In addition, the resistance may be greatly different from that obtained in the simulation if the RFID tag is actually attached to metal. Therefore, the resistance should be adjusted also depending on metal to which the RFID tag is to be attached.

The following describes the relationships among the position of the short pin 12, the capacitance and the resistance of the inverted-F antenna 10, and the transmission distance of radio waves in the case where the RFID tag of FIG. 1 is attached to a copper clad board.

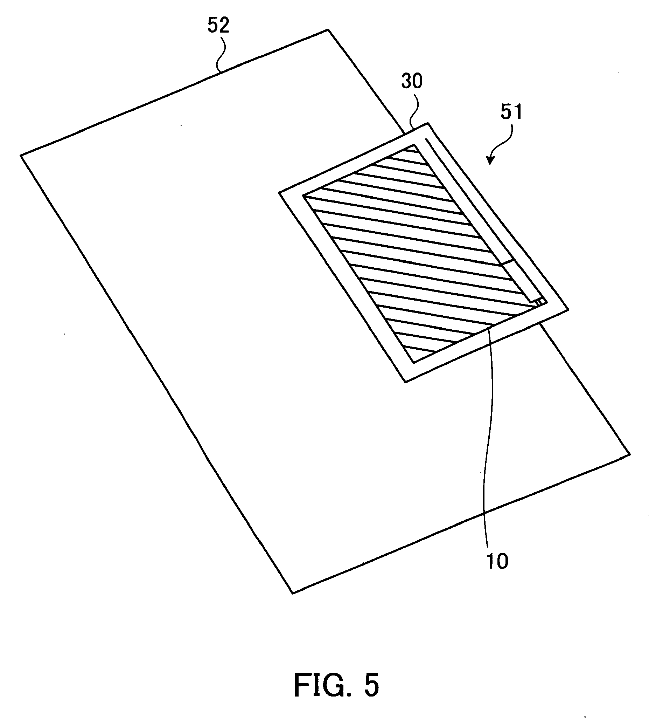

FIG. 5 is a perspective view of an inverted-F antenna attached to a copper clad board. In this figure, an RFID tag 51 is attached to a copper clad board 52. The RFID tag 51 is the RFID tag of FIG. 1, and has the inverted-F antenna 10 and the film 30. The copper clad board 52 is a rectangular of 205 mm $\times$ 130 mm.

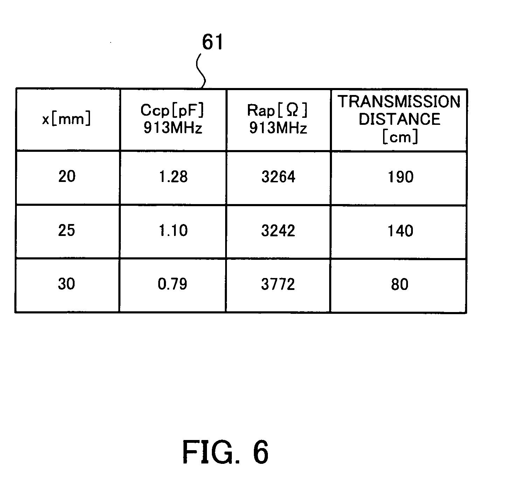

FIG. 6 shows the relationships among the position of a short pin, the capacitance and the resistance of an inverted-F antenna, and the transmission distance of radio waves. A table 61 of this figure shows actual measurement values obtained when the RFID tag 51 attached to the copper clad board 52 of FIG. 5 performs radio communication via 913 MHz radio waves.

As shown in this table 61, when the position (space x) of the short pin 12 was 20 mm, the actual measurement value of the capacitance Ccp of the inverted-F antenna 10 was 1.28 pF and the resistance was 3264 Ω. The transmission distance of radio waves was 190 cm. When the position of the short pin 12 was 25 mm, the actual measurement value of the capacitance Ccp of the inverted-F antenna 10 was 1.10 pF and the resistance was 3242 Ω. The transmission distance of radio waves was 140 cm. When the position of the short pin 12 was 30 mm, the actual measurement value of the capacitance Ccp of the inverted-F antenna 10 was 0.79 pF, and the resistance was 3772 Ω. The transmission distance of radio waves was 80 cm.

The following describes the transmission distance of radio waves in the case where the RFID tag is attached to a notebook personal computer.

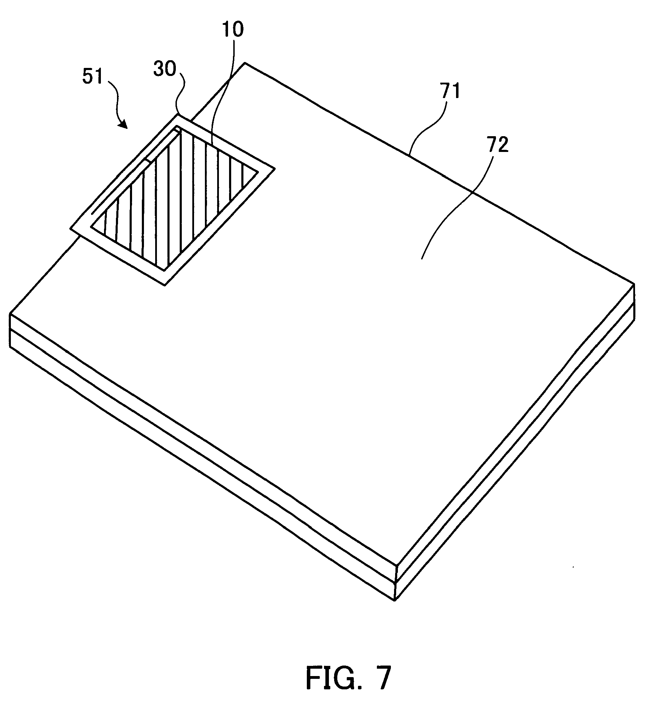

FIG. 7 is a perspective view of the RFID tag of FIG. 1 attached to the back surface of a liquid crystal screen of a notebook personal computer. In this figure, the RFID tag 51 is attached to the back surface 72 of the liquid crystal screen of the notebook personal computer 71. The RFID tag 51 is the RFID tag shown in FIG. 1 and has the inverted-F antenna 10 and the film 30. The position of the short pin 12 of the inverted-F antenna 10 is 20 mm. In the case where the RFID tag 51 was attached to the back surface 72 of the liquid crystal screen of the notebook personal computer 71 in this way, the transmission distance of the radio waves was 140 cm.

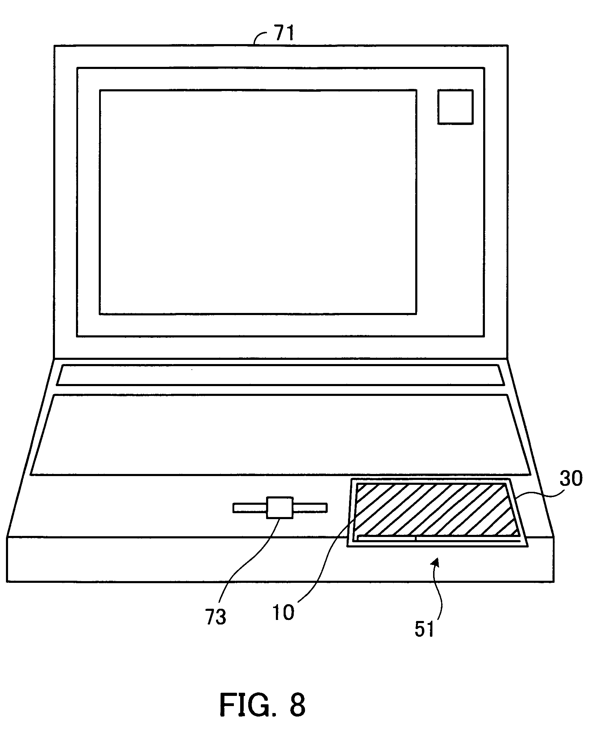

FIG. 8 is a perspective view showing the RFID tag of FIG. 1 attached next to a fingerprint sensor of a notebook personal computer. In this figure, the RFID tag 51 is attached next to a fingerprint sensor 73 of the notebook personal computer 71. The RFID tag 51 is the RFID tag shown in FIG. 1 and has the inverted-F antenna 10 and the film 30. The position of the short pin 12 of the inverted-F antenna 10 is 20 mm. In the case where the RFID tag 51 was attached next to the fingerprint sensor 73 of the notebook personal computer 71 in this way, the transmission distance of radio waves was 140 cm.

The change of the impedance of the inverted-F antenna 10 due to frequency will be now described.

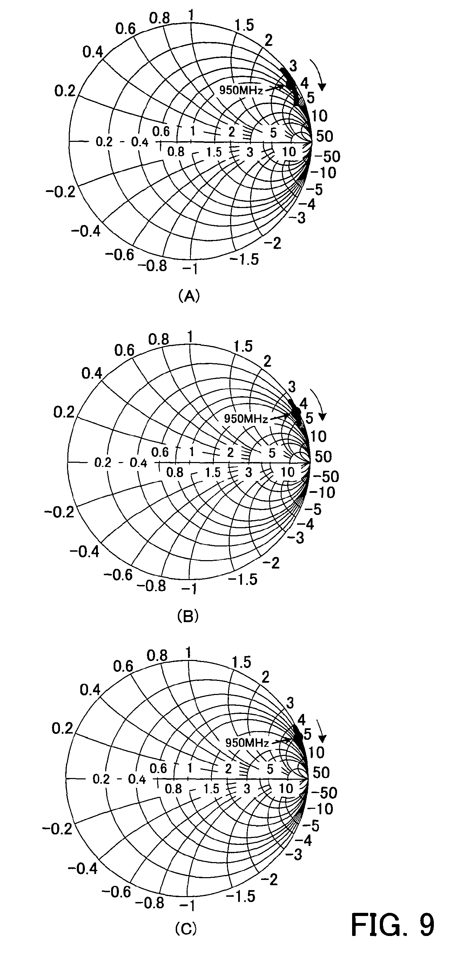

FIG. 9 is smith charts showing simulation of an inverted-F antenna. FIG. 9(A) shows the change of the impedance in the case where the position of the short pin was 20 mm. When the frequency was changed from 800 MHz to 1.1 GHz, the impedance changed as shown by an arrow of FIG. 9(A). FIG. 9(B) shows the change of the impedance in the case where the position of the short pin was 25 mm. When the frequency was changed from 800 MHz to 1.1 GHz, the impedance changed as shown by an arrow of FIG. 9(B). FIG. 9(C) shows the change of the impedance in the case where the position of the short pin was 30 mm. When the frequency was changed from 800 MHz to 1.1 GHz, the impedance changed as shown by an arrow of FIG. 9(C).

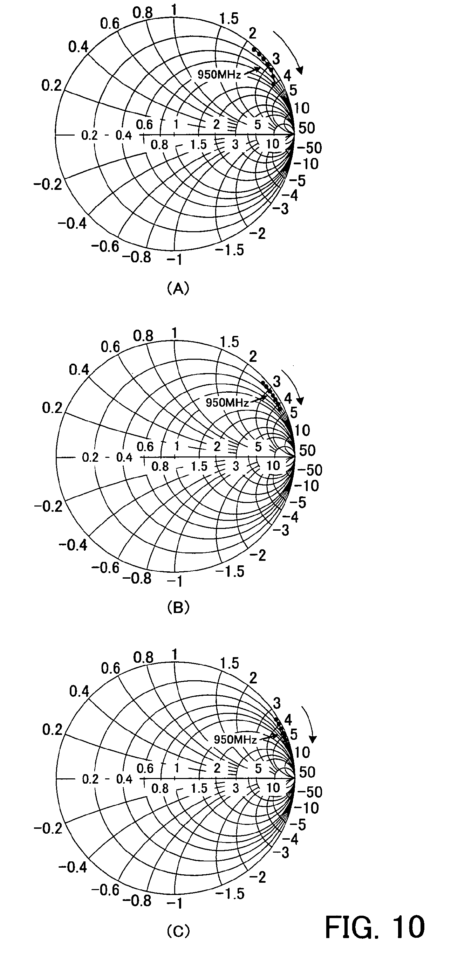

FIG. 10 is smith charts showing actual measurement values of an inverted-F antenna. FIG. 10(A) shows the change of the impedance in the case where the position of the short pin was 20 mm. When the frequency was changed from 800 MHz to 1.1 GHz, the impedance changed as shown by an arrow of FIG. 10(A). FIG. 10(B) shows the change of the impedance in the case where the position of the short pin was 25 mm. When the frequency was changed from 800 MHz to 1.1 GHz, the impedance changed as shown by an arrow of FIG. 10(B). FIG. 10(C) shows the change of the impedance in the case where the position of the short pin was 30 mm. When the frequency was changed from 800 MHz to 1.1 GHz, the impedance changed as shown by an arrow of FIG. 10(C). The actual measurement values of the impedance of FIG. 10 show almost same changes as the simulation shown in FIG. 9.

By the way, the change of the impedance of the inverted-F antenna 10 is preferably small. This is because, if the impedance greatly changes due to frequency, it is difficult to match the capacitance of the IC chip 20. The inverted-F antenna 10 shown in FIG. 1 has a small change of the impedance as shown in FIGS. 9 and 10, it is easy to realize the impedance matching with the IC chip 20. In addition, since the change of the impedance due to frequency is small, it is possible to use a wider bandwidth of radio waves.

The following describes the change of characteristics of the inverted-F antenna 10 when the RFID tag of FIG. 1 is attached to a metal housing.

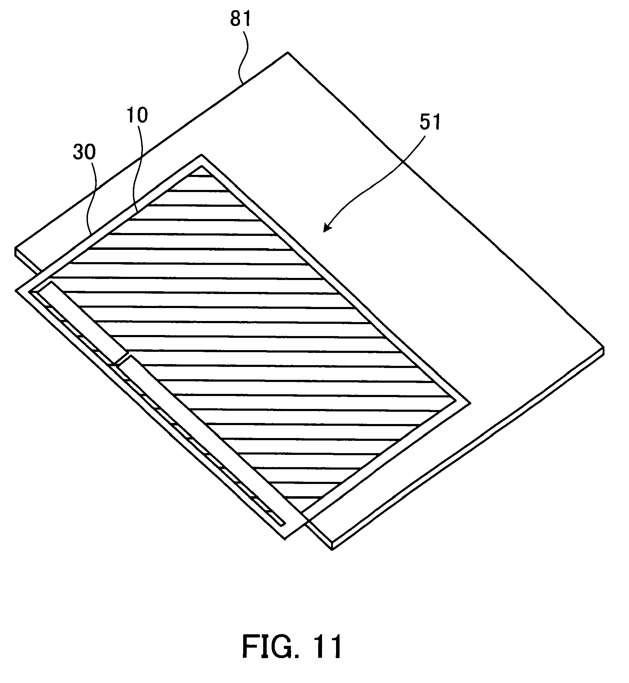

FIG. 11 is a perspective view of an RFID tag attached to a metal housing, which is a model for characteristic change. An illustrated metal housing 81 is iron and has a size of 70 mm $\times$ 100 mm $\times$ 5 mm. The conductivity of the metal housing 81 is $1 \times 10^7$ S/m. The RFID tag 51 is the RFID tag shown in FIG. 1 and has the inverted-F antenna 10 and the film 30. The position of the short pin 12 is 35 mm. In addition, the film 30 is 0.2 mm in thickness and the inverted-F antenna 10 is positioned 0.2 m above the metal housing 81.

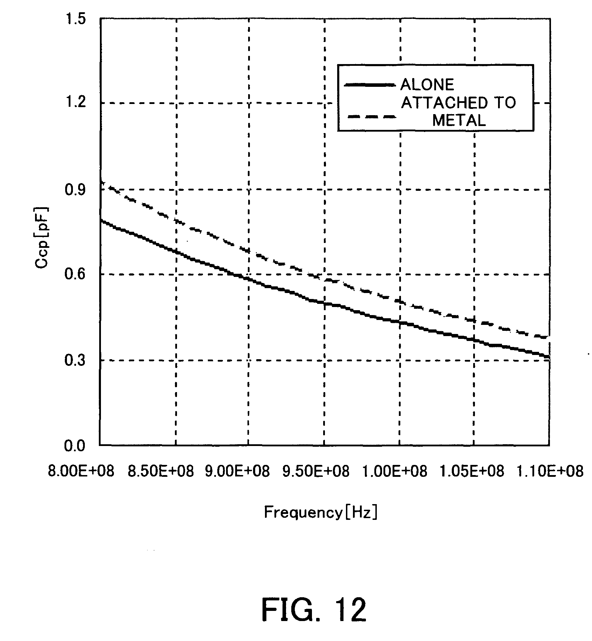

FIG. 12 is a graph showing the relationships between the frequency and the capacitance in the cases of the RFID tag alone and attached to a metal housing. The real line of this graph shows the relationships between the frequency and the capacitance in the case of the RFID tag 51 shown in FIG. 11 alone. The dotted line of the graph shows the relationships between the frequency and the capacitance in the case where the RFID tag 51 of FIG. 11 is attached to the metal housing 81. As shown in this graph, attachment of the RFID tag 51 to the metal housing 81 entirely increases the capacitance by about 0.085 pF with respect to the frequencies.

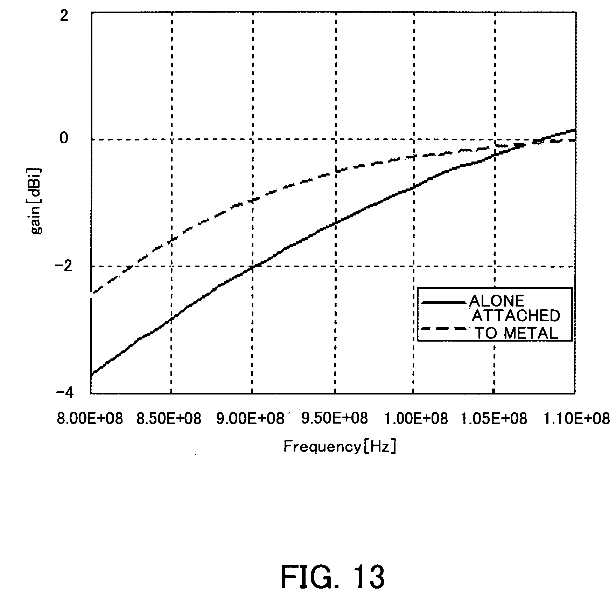

FIG. 13 is a graph showing the relationships between the frequency and the gain in the cases of an RFID tag alone and attached to a metal housing. The real line of this graph shows the relationships between the frequency and the gain in the case of the RFID tag of FIG. 11 alone. The dotted line of the graph shows the relationships between the frequency and the gain in the case where the RFID tag 51 of FIG. 11 is attached to the metal housing 81. As shown in this graph, attachment of the RFID tag 51 to the metal housing 81 partly increases the gain with respect to the frequencies.

Since the impedance and the gain are changed by attaching the RFID tag 51 to the metal housing 81 as described above, the transmission distance of radio waves can be made longer if an appropriate designing can be done for a metal housing to be used for attachment.

Assume now that an IC chip exhibits a transmission distance of 2.15 m in radio communication using a half-wave folded dipole antenna. The following describes how to predict a transmission distance in the case where the IC chip is applied in the RFID tag of FIG. 1.

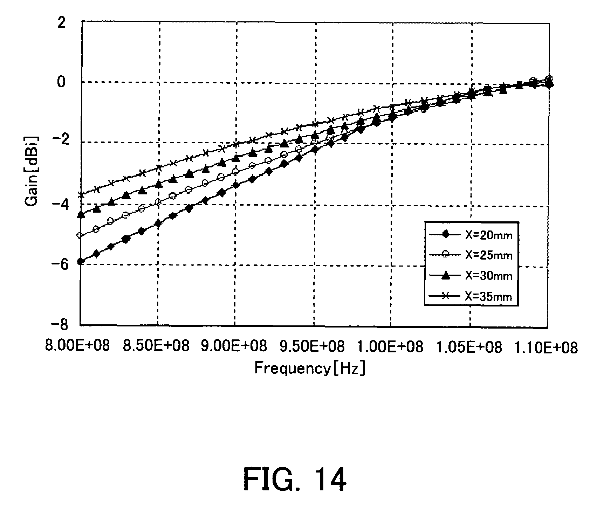

FIG. 14 is a graph showing the gain in the case where an IC chip is applied in the RFID tag of FIG. 1, the IC chip exhibiting a transmission distance of 2.15 m in radio communication using a half-wave folded dipole antenna. This graph shows the gain of the inverted-F antenna 10 in the case where the IC chip is applied in the RFID tag of FIG. 1, the IC chip exhibiting a transmission distance of 2.15 m in radio communication using a half-wave folded dipole antenna. Black dots "•" of this graph show the gain in the case where the position of the short pin 12 of the inverted-F antenna 10 is 20 mm. White dots "o" of the graph show the gain in the case where the position of the short pin 12 of the inverted-F antenna 10 is 25 mm. Triangle marks "∆" (black triangles in the graph) of the graph show the gain in the case where the position of the short pin 12 of the inverted-F antenna 10 is 30 mm. Cross marks "x" of the graph show the gain in the case where the position of the short pin 12 of the inverted-F antenna 10 is 35 mm.

At 950 MHz, the gain is lowered by about 1.3 dBi to 2.2 dBi. The gain is lowered by 2.0 dBi when the position of the short pin 12 is 25 mm.

Since the gain of the half-wave folded dipole antenna is 2 dBi, the gain of the RFID tag of FIG. 1 is lowered by 4 dBi with respect to the gain of the half-wave folded dipole antenna. Therefore, $10^{-0.4} \times 2.15 \approx 1.1$ m, and the transmission distance can be predicted to be 1.1 m when the IC chip that exhibits a transmission distance of 2.15 m with the half-wave folded dipole antenna is installed on the RFID tag of FIG. 1.

Now, the directivity of an RFID tag will be described.

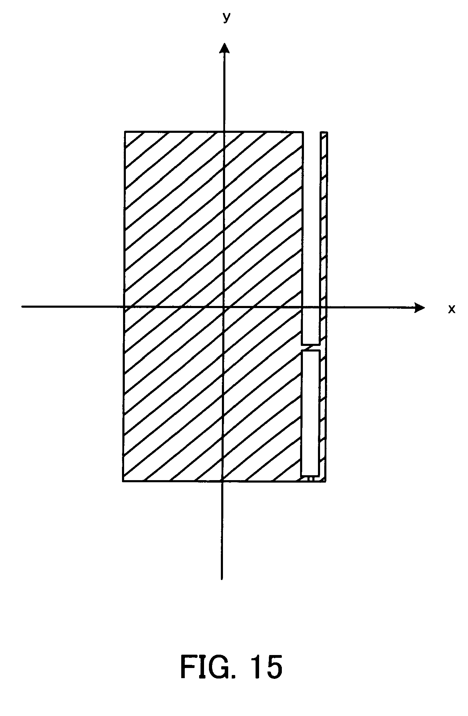

FIG. 15 is a view for explaining the directivity of an RFID tag. Assume that the RFID tag is arranged on an x-y coordinate plane as shown in this figure. The illustrated RFID tag is the RFID tag shown in FIG. 1.

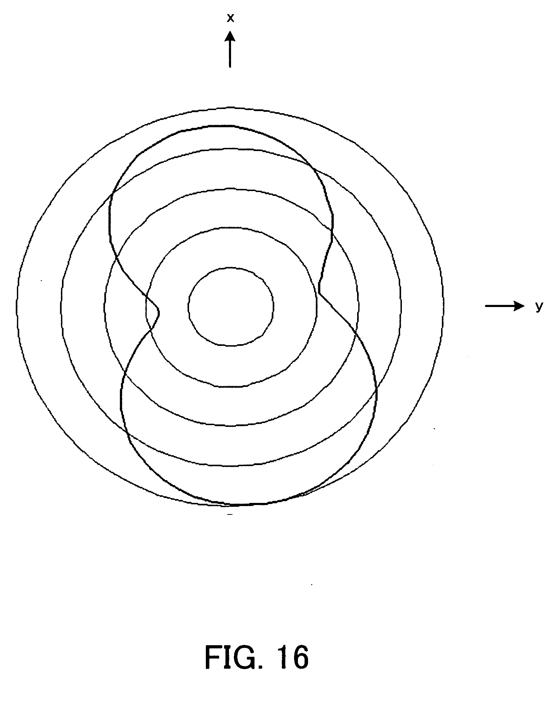

FIG. 16 shows the directivity of the RFID tag of FIG. 15. The RFID tag shown in FIG. 15 has the directivity in the x-axis, rather than the y-axis in FIG. 16.

Since the flat inverted-F antenna 10 is formed on the film 30, the RFID tag is thin and flexible, and is usable when attached to a curved surface of a metal housing. In addition, manufacturing is simple and so the manufacturing cost can be reduced.

Further, since the film 30 is attached to metal such that the radiating element 11, the short pin 12, and the power supply portion 13 of the formed inverted-F antenna 10 are projected from the metal, the tag can be used for communication when attached to the metal.

In this connection, in the case where the RFID tag is attached to an object other than metal, the radiating element 11, the short pin 12, and the power supply portion 13 are not necessarily projected.

Now the second embodiment of this invention will be described in detail with reference to the accompanying drawings. In the first embodiment, the power supply portion 13 is connected to one end of the radiating element 11 and the short pin 12 is positioned between both ends of the radiating element 11, as described with FIG. 1. In the second embodiment, the short pin 12 is explained as one end of the radiating element 11 and the power supply portion 13 is positioned between both ends of the radiating element 11.

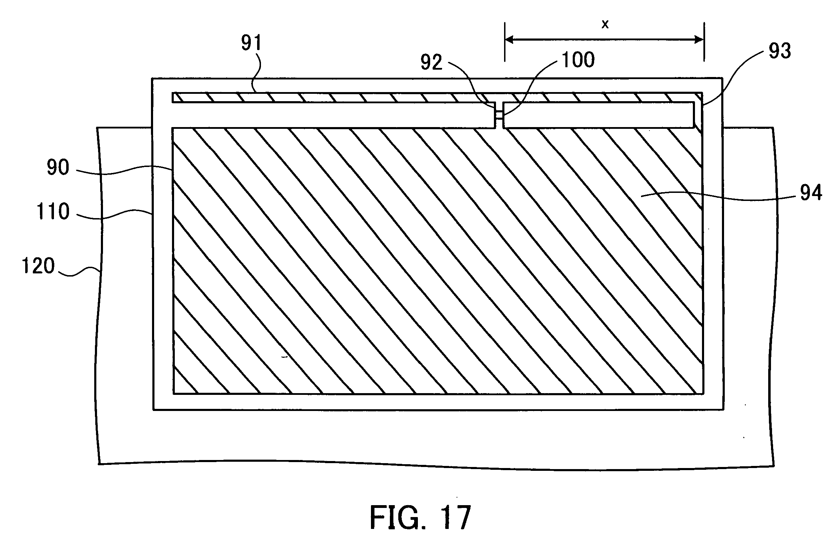

FIG. 17 is a plan view of an RFID tag according to the second embodiment. The RFID tag comprises an inverted-F antenna 90, an IC chip 100, and a film 110, as shown in this figure. The inverted-F antenna 90 is made of, for example, metal foil, and is attached to the film 110. It should be noted that FIG. 17 shows a case where this RFID tag is attached to a metal housing 120 of an electronic device, for example.

The inverted-F antenna 90 comprises a radiating element 91, a power supply portion 92, a short pin 93, and a ground bottom board 94. The radiating element 19 has the same length as one side of the ground bottom board 94, and is formed in parallel to the board 94, and one end thereof is connected to the short pin 93 and the other end thereof is open. In addition, the power supply portion 92 is provided between both ends of the radiating element 91. The IC chip 100 is attached between the power supply portion 92 and the ground bottom board 94. The IC chip 100 performs radio communication with a reader/writer via the inverted-F antenna 90 via radio waves of 953 MHz UHF band. The IC chip 100 writes data received from the reader/writer and sends read data to the reader/writer.

The film 110 with the inverted-F antenna 90 formed thereon is attached to the metal housing 120 such that the radiating element 91, the power supply portion 92, and the short pin 93 are projected from the metal housing 120 (positioned outside the metal housing 120). The RFID tag may be attached to the metal housing with a double-stick tape or with glue. In this figure, the film 110 is attached such that one side of the ground bottom board 94 on which the power supply portion 92 and the short pin 93 are provided is aligned with one side of the metal housing 120, and the radiating element 91, the power supply portion 92, and the short pin 93 are projected from the metal housing 120. Since the radiating element 91, the power supply portion 92, and the short pin 93 do not overlie the metal housing 120, transmission/reception of radio waves with the reader/writer can be realized.

A space x between the power supply portion 92 and the short pin 93 is determined by the impedance of the IC chip 100. That is, the position of the power supply portion 92 is determined so as to match the impedance of the IC chip 100. In addition, the size of the film 110 is the same as that of the outer frame of the inverted-F antenna 90 or larger such that the inverted-F antenna 90 can be attached to the film 110.

The same materials and manufacturing methods explained with FIG. 1 can be applied to the inverted-F antenna 90 and the film 110, and therefore will not be explained again.

Now the change of the impedance of the inverted-F antenna 90 due to frequency will be described.

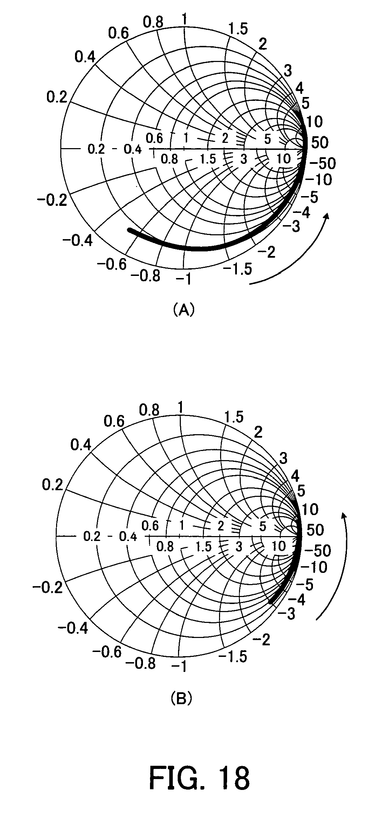

FIG. 18 is smith charts showing simulation of an inverted-F antenna. FIG. 18 (A) shows the change of the impedance in the case where the position of the short pin was 20 mm. When the frequency was changed from 800 MHz to 1.1 GHz, the impedance changed as shown by an arrow of FIG. 18(A). FIG. 18(B) shows the change of the impedance in the case where the position of the short pin was 25 mm. When the frequency was changed from 800 MHz to 1.1 GHz, the impedance changed as shown by an arrow of FIG. 18(B).

The inverted-F antenna 90 of FIG. 17 exhibits a larger change of the impedance than the inverted-F antenna 10 of FIG. 1, as shown in FIG. 18. Therefore, the inverted-F antenna 90 of FIG. 17 is more difficult to realize the impedance matching than the inverted-F antenna 10 of FIG. 1. In addition, since the change of the impedance due to frequency is large, the inverted-F antenna 90 of FIG. 17 can use a narrower bandwidth of radio waves than the inverted-F antenna 10 of FIG. 1.

Even in the case where the short pin 93 is arranged at one end of the radiating element 91 and the power supply portion 92 is provided between both ends of the radiating element 91 as described above, the RFID tag attached to the metal housing 120 can be used for radio communication.

It should be noted that, in the case where an RFID tag is attached to an object other than metal, the radiating element 11, the short pin 12, and the power supply portion 13 are not necessarily projected.

The foregoing is considered as illustrative only of the principle of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

Description of Reference Numerals

| | |
|---|---|
| 10 | Inverted-F antenna |
| 11 | Radiating element |
| 12 | Short pin |
| 13 | Power supply portion |
| 14 | Ground bottom board |
| 20 | IC chip |
| 30 | Film |
| 40 | Metal housing |

**Claims**

1. A radio frequency identification tag that can be attached to metal, comprising:

   a film; and
   an inverted-F antenna flatly formed on the film, wherein the film is attached to the metal such that an radiating element, a short pin, and a power supply portion of the formed inverted-F antenna are projected from the metal.

2. The radio frequency identification tag according to claim 1, wherein the power supply portion is formed at one end of the radiating element and the short pin is formed between both ends of the radiating element.

3. The radio frequency identification tag according to claim 2, wherein a position of the short pin is determined so as to match an impedance of a semiconductor device to be used for installation.

4. The radio frequency identification tag according to claim 1, wherein the short pin is formed at one end of the radiating element and the power supply portion is formed between both ends of the radiating element.

5. The radio frequency identification tag according to claim 4, wherein a position of the power supply portion is determined so as to match an impedance of a semiconductor device to be used for installation.

6. The radio frequency identification tag according to claim 1, wherein the inverted-F antenna is formed on the film by printing.

7. The radio frequency identification tag according to claim 1, wherein the inverted-F antenna is made of metal foil and is attached to the film.

8. The radio frequency identification tag according to claim 1, wherein the inverted-F antenna is formed on the film by deposition.

9. The radio frequency identification tag according to claim 1, wherein the inverted-F antenna is formed by etching metals laminated on the film.

10. The radio frequency identification tag according to claim 1, wherein the film is made of polyethylene terephthalate.

FIG. 1

EP 1 898 488 A1

N1

10 INVERTED-F
ANTENNA

20 IC CHIP

R1   L1

C1   R2

N2

FIG. 2

FIG. 3

FIG. 4

FIG. 5

61

| x[mm] | Ccp[pF]<br>913MHz | Rap[Ω]<br>913MHz | TRANSMISSION<br>DISTANCE<br>[cm] |
|-------|-------------------|------------------|----------------------------------|
| 20 | 1.28 | 3264 | 190 |
| 25 | 1.10 | 3242 | 140 |
| 30 | 0.79 | 3772 | 80 |

# FIG. 6

FIG. 7

FIG. 8

(A)

(B)

(C)

FIG. 9

(A)

(B)

(C)

FIG. 10

FIG. 11

FIG. 12

FIG. 13

FIG. 14

FIG. 15

FIG. 16

FIG. 17

EP 1 898 488 A1

(A)

(B)

FIG. 18

<div align="center">

**INTERNATIONAL SEARCH REPORT**

</div>

| | International application No. |
|---|---|
| | PCT/JP2005/011807 |

**A. CLASSIFICATION OF SUBJECT MATTER**
*H01Q1/38*(2006.01), *B42D15/10*(2006.01), *G06K19/00*(2006.01), *H01Q9/04* (2006.01)

According to International Patent Classification (IPC) or to both national classification and IPC

**B. FIELDS SEARCHED**

Minimum documentation searched (classification system followed by classification symbols)
*H01Q1/38*(2006.01), *B42D15/10*(2006.01), *G06K19/00*(2006.01), *H01Q9/04* (2006.01)

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2001-73889 A1 (Seiko Epson Corp.), 04 October, 2001 (04.10.01), Page 17, line 20 to page 20, line 7; Figs. 7 to 12 & US 2002-163473 A1     & EP 1291964 A1 | 1-10 |
| Y | JP 2003-85501 A (Dainippon Printing Co., Ltd.), 20 March, 2003 (20.03.03), Full text; all drawings (Family: none) | 1-10 |
| Y | JP 2002-261533 A (Sony Corp.), 13 September, 2002 (13.09.02), Full text; all drawings & US 2004-27288 A1     & EP 1387435 A1 & WO 2002-71542 A1 | 2,3 |

| ☒ | Further documents are listed in the continuation of Box C. | ☐ | See patent family annex. |

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 September, 2005 (27.09.05) | 18 October, 2005 (18.10.05) |

| Name and mailing address of the ISA/ Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
| --- |
| PCT/JP2005/011807 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 7-288415 A  (Sanyo Electric Co., Ltd.),<br>31 October, 1995 (31.10.95),<br>Full text; all drawings<br>(Family: none) | 1-10 |

Form PCT/ISA/210 (continuation of second sheet) (January 2004)

**EP 1 898 488 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002252518 A
- JP 2002117383 A